# EUROPEAN PATENT SPECIFICATION

(11) **EP 1 506 658 B1**
(45) Date of publication and mention of the grant of the patent: **02.04.2008**
(21) Application number: 03723603.1
(22) Date of filing: 08.05.2003
(51) Int. Cl.: H04L 29/06, H04L 12/18, G06F 17/30

(54) **APPARATUS AND METHOD FOR DISTRIBUTION OF STREAMED REAL-TIME INFORMATION BETWEEN CLIENTS**
VORRICHTUNG UND VERFAHREN ZUM VERTEILEN VON GESTREAMTEN ECHTZEIT-INFORMATIONEN ZWISCHEN CLIENTS
DISPOSITIF ET PROCEDE DE DISTRIBUTION D'INFORMATIONS EN TEMPS REEL DIFFERENCIEES A DES CLIENTS

(30) Priority: 08.05.2002 SE 0201426
(43) Date of publication of application: 16.02.2005
(73) Proprietor: Google Sweden Technique AB, 114 87 Stockholm (SE)
(72) Inventor: PARNES, Peter, S-977 54 LULEÅ (SE)
(74) Representative: Herbjörnsen, Rut
(86) International application number: PCT/SE2003/000745
(87) International publication number: WO 2003/096649

(56) References cited:
- WO-A1-00/64100
- WO-A1-00/73758
- WO-A1-01/69398
- US-A1- 2001 052 008
- US-A1- 2002 023 166
- 'Department of Microelectronics and Information Technology, Royal Institute of Technology, Stockholm', May 2001 article 'Asa: streaming: Past. present and future. An investigation into the synchronized multimedia integration language 2.0 (SMIL 2.0)', pages 8-18, 21 - 23, XP002904981
- 'W3C Working Draft', 21 September 2000 article 'Synchronized multimedia integration language (SMIL 2.0) specification', pages 1 - 83, XP002904982 Section 5; The SMIL 2.0 Layout Modules

## Description

### Technical field of the invention

The present invention relates to distribution of real-time image and audio information. More in detail, the invention relates to an apparatus and method for sending video from the one image capturing means, such as a camera, to several destinations.

### Background of the invention

During the last 20 years, and in particular during the last decade, the information obtainable from the Internet has increased immensely. Users of computers and computer controlled equipment have become used to the ability of retrieving all kinds of information at high transmission rates and especially for the younger generation, the Internet now represents the first choice when searching for information. The impact that the Internet will have on everyone's daily life cannot be overestimated, at least in a little longer perspective than a few years.

The Internet offers access to information sources world-wide and it has turned out to be the perfect tool for retrieval of all kinds of content, irrespective of whether the information content is audio or graphics. Typically we do not expect to benefit from the Internet and information found and retrieved from there until we arrive at some familiar point, such as in the work office, in school or in front of a computer terminal at home. The increasing number and variety of wireless devices offering Internet Protocol (IP) based connectivity, such as mobile communication terminals, handheld computers, etc, are supposed to change our perceptions about the Internet.

US 2002023166 discloses a stream merging servers US patent 5,758,094 discloses a computer imaging communications system which includes a flexible CCD controller architecture for computer-based camera applications. The disclosed architecture allows control and intelligence to be distributed among the host computer, computer adapter interface and a camera head. In the case of geographically distributed cameras, control can be further shared between a remote host computer and a local controller computer. However, if a user wants to send real-time video from his computer terminal to several sessions, irrespective of the kind of computer terminal, such as a handheld computer having an integrated mobile communication terminal, prior art does not allow this. Operating systems of today do not allow several applications to retrieve real-time image information from the same image camera at the same time. Software-based applications have been developed in order to enable video transmission to a plurality of users. The applications can be acquired through video capture cards to which several video cameras can be connected, but simultaneous access is not provided. That is a major drawback having the implication that a user is not able to access several sessions, like different electronic meetings at the same time. Moreover, solutions presented in prior art are not independent of the video device being used, which independence is a requirement when producing software products for electronic meetings, due to the vast number of different image capturing means already available for purchase on the market.

### Summary of the invention

It is therefore an object of the present invention to alleviate the previously mentioned shortcomings of prior art associated with group communication services. This is accomplished by an apparatus and method for distribution of streamed signals between a group of different participating users in a computer network, the users accessing client terminals with multiple facilities for accessibility and participation in various media sessions, the apparatus comprising, image capturing means adapted to capture and transmit a streamed signal within at least one established media session, the session defined by the users in a computer network having access to the signal stream,
a first facility of the client terminal being associated with the media session, the facility having an established connection with the image capturing means for receiving the streamed signal sent out therefrom,
characterised in that
a second facility of the client terminal being adapted to send out a request within a common session, the request instructing the first facility of the client terminal to provide a copy to the second facility of the signal stream transmitted from the image capturing means, so as to allow the user access to multiple media sessions simultaneously.

One advantage of the invention is that it allows several applications, such as client terminals operated by different users to share a single web camera, video camera or other image capturing device. Utilising a software based operating system interface and a so-called host together with connections between the host, camera and client terminals makes it possible for each associated facility, i.e. activated program version, of a client terminal to receive a copy of the video stream originally provided to only one of the program instances of a certain client terminal. Due to the invention, it is made possible to take part in several different media sessions simultaneously, preferably active participation in one session and simultaneous passive participation in the others. However, active participation in several sessions is also possible although there will be few applications initially.

According to the present invention, the Internet is used as a means for distribution of streamed media. Using the Internet is the optimal solution as long as it provides a reliable connection having sufficient transmission rates, but without associated problems with congestion of data in the network. Problems with congestion can be overcome, and it is of vital importance that consumers of streamed media can take part of a media event simultaneously and independently. The present invention allows this, and it does not lead to undesired overload within the computer networks with unnecessary amounts of raw data that could be compressed.

As previously mentioned, the amount of data distributed through the network is reduced, since the data stream sent as a copy from one client terminal to other associated client terminals can be compressed, as a result of which the total amount of data transmitted over the network is reduced. According to the present invention, the real-time data stream transmitted directly from the image capturing means to the first receiving facility of the client terminal can be compressed only once and a copy of the compressed stream is transmitted to the other receiving facilities of the client terminal without having to included keys and related security information in order to decompress or decrypt the stream.

### Brief description of the drawings

The features, objects, and further advantages of this invention will become apparent by reading this description in conjunction with the accompanying drawings, in which like reference numerals refer to like elements and in which:
Fig 1 illustrates a schematic overview of the apparatus for distribution of streamed image and audio signals according to the present invention.
Fig 2 is a chart depicting the sequential flow during operation according to the present invention.

### Detailed description

The following description is of the best mode presently contemplated for practising the invention. The description is not to be taken in a limiting sense, but is made merely for the purpose of describing the general principles of the invention. The scope of the invention should be ascertained with reference to the issued claims.

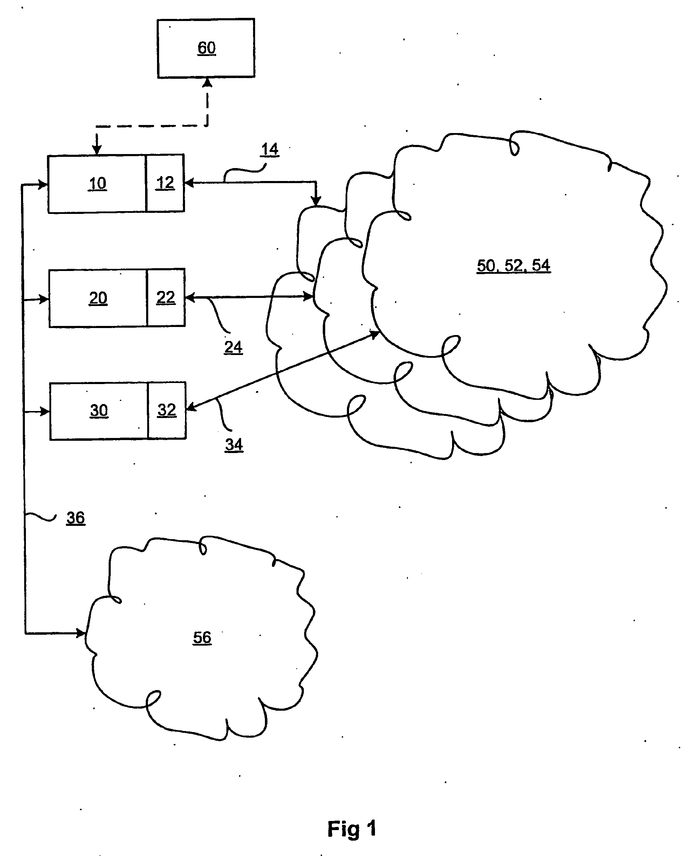

With reference to Fig 1, a schematic overview illustrates the apparatus for distribution of streamed image and audio signals according to the present invention. A plurality of facilities 10, 20, 30 of a client terminal, each facility having its respective application protocol interface, API, 12, 22, 32, are connected to a so-called media session 50, 52, 54 via connecting links 14, 24, 34. The media session involves and connects any number of users having access to a signal stream providing interactive communication with each other via parts of a computer network. Any number of media sessions for simultaneous participation by users is possible by means of the present invention. The communication is by means of image or audio or a combination thereof. Except for the media session, each facility of the client terminal is via a connecting link 36 connected to a common communication session 56, such as a multicast group. This common communication session may be locally allocated in the client terminal and each facility accesses the session continuously.

Preferably the computer network is part of the Internet or any other global interconnecting network to which hosted participants have access. The connecting lines may be various wired connections, but likely for use already today or at least in a near future are also wireless transmission technologies, such as access technology based on infrared, Bluetooth or wireless-LAN. Connection means used in association with the present invention will be developing with new and emerging access technologies. Each facility of the client terminal is connectable to at least one image capturing means 60, preferably a so-called web-camera, a digital camera or a digital video camera. Each user has his own image capturing means, which means is coupled to the client terminal from which the user typically participates in a media session.

The facilities of client terminals themselves arrange the distribution of a copy of the data stream within the media session. This is an autonomous function between facilities of client terminals as soon as the participants in a certain media session have been defined. It is conceivable to have a distributing unit, such as an administered portal handling accessibility of users willing to participate in a certain media session. Necessary identification, authentication and authorisation of participants with a certain media session is carried out, but a detailed description of those steps clearly goes beyond the scope of this application and is therefore omitted here. The portal is seen by a potential participant willing to join a media event, and the portal is the place from where the media sessions are made accessible, or by which a so-called electronic meeting with a plurality of participants or a real-time multimedia event distributed to several users is made possible.

The media session, which is a defined number of users of an internal or external computer network, the users having access to a media session for authorised participants, is suitable for data transmission due to its scalability and flexibility. In most conceivable situations, the media session includes users and their respective image capturing devices at different locations, why the Internet preferably can be used for transporting data between the client terminals of participating users. However, in order to use the Internet as a means for distribution, message transport limitations, such as time-to-live parameters, must be adapted to the message distribution means in use. As an example, a parameter limiting the message transport to one specific client terminal, such as time-to-live set to 0, may not be used when communication is to be established between different client terminals.

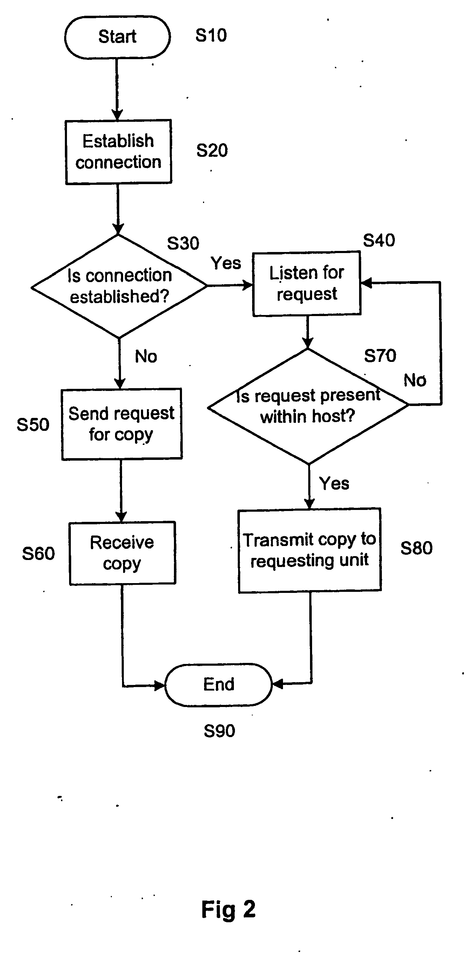

With reference to Fig 2, a flow chart depicts the sequential flow of operational steps according to the present invention. The sequence starts (S10) with a first application 10 which in most cases is anyone of a plurality of facilities 10, 20, 30 of client terminals, opening (S20) the image capturing and transmitting device 60 using the standard application protocol interface of the operating system. Subsequently, a second facility 20, 30 of a client terminal will try to open (S20) the same device but this facility will fail, since the device is momentarily occupied by sending raw data to the first facility 10. Image capturing devices and operating systems described in prior art are not adapted to send out the data stream to a larger number of facilities of client terminals, and hence the first facility of the client terminal blocks transmission of the raw data stream to other users or potential media consumers. However, according to the invention, the second facility of the client terminal, which is either of the at least one associated facilities 20, 30 within the defined media session 50, 52, 54 will then transmit (S50) a message using IP-multicast within the host. By utilising the definition time-to-live set to 0, the message will be distributed just within the common communication session 56 and the first facility 10 of the client terminal, which has established a data stream connection with the image capturing means, will receive this common communication session internal message. The message contains a request for a copy of the video stream as well as the name of the device and the name of the port on the device (video capture hardware usually have several input ports for different types of hardware connections). If the request matches the current predetermined settings of the first facility of the client terminal, this will answer the second facility of the client terminal that it will serve it in a server-client relationship. This results in that the second facility of the client terminal opens a suitable socket and the first facility is able to send (S80) a copy of the video stream to the second facility. The second facility then continuously (e.g. every 10 seconds) transmits (S50) a message to the first facility that it still wants a copy of the stream and as soon as these messages stop coming, the first facility will stop serving the second facility. In case a third facility of the client terminal 20, 30, which is not previously involved in transmission, also wants a copy, the procedure will be equal as for the second facility, and the first facility of the client terminal will then send a copy to both the second and third facility of the client terminal.

Time-to-live, TTL, is a widespread way of determining and limiting how far IP-multicast messages should reach in a computer network. TTL set to 0 means that messages should not leave the host. TTL set to 1 means that a message should not leave the local network, i.e. should do not go past the first router.

If the first facility of the client terminal should stop sending for any reason, by user interaction or program failure, the thereupon depending clients will detect this by interpreting the absence of messages sent from the first facility of the client terminal to a cease in sending. Moreover, it will also explicitly notice that the data stream has stopped. In response to receiving this notification message or loss of data, the second and third facilities of the client terminal will both try to open the image capturing device and randomness decides who will first establish the connection with the video camera or web camera. In a case where the third facility of the client terminal establishes the connection first, it will become the new server. The second facility of the client terminal that did not first manage to open the device will proceed with a client request to the third facility as before.

To save bandwidth while maintaining the image quality the data stream can also be sent between the first facility and the second facility of the client terminal in encoded form, i.e. the raw video stream is transferred into a form needing lower bandwidth. If the first facility for example is encoding into the M-JPEG format; the encoded stream can be sent to the second and third facilities of the client terminal instead of the raw data stream. This M-JPEG signal format is used in a first embodiment of the present invention.

According to an alternative embodiment of the invention, instead of sending an encoded copy to the facilities of the client terminal it is possible to let the server send the stream directly to its destination. This would save processing capacity in the client terminal but instead requires sharing of logic between the client and server to a greater extent. For instance if the client terminal wants to encrypt the outgoing stream it has to share its cryptographic information with the server which must be dealt with in order to maintain the security of the application. In the case of using unicast data streams towards a unicast reflector together with a firewall where the traffic has to come from a certain port, additional information must be provided to involved units, in order to pass security arrangements without disturbances. Even though the best mode of the present invention is more flexible and does not require these mentioned additional features, the alternative embodiment could be used in certain situations when there is shortage of for example processing capacity.

The present invention is applicable in various contexts as long as sharing a video device is desirable. This could e.g. be a local TV application where two different applications, such as a TV display program and a TV recorder are running on the same machine. In prior art disclosures this is managed by software from the same company. Though TV applications of today may support both display and recording simultaneously, they do not share the video stream between different applications but instead share the stream within the same application instance.

In accordance with the present invention, software is developed in parallel with the apparatus for distribution of signals. The software resides in a memory associated with said apparatus. The software is designed for instructing the hardware to carry out the sequential method steps described with reference to Fig 2.

## Claims

1. Apparatus for distribution of streamed signals between a group of different participating users in a computer network, the users accessing client terminals with multiple facilities (10, 20, 30) for accessibility and participation in various media sessions, the apparatus comprising,
image capturing means (60) adapted to capture and transmit a streamed signal within at least one established media session (50, 52, 54), the session defined by the users in a computer network having access to the signal stream,
a first facility (10) of the client terminal being associated with the media session, the facility having an established connection with the image capturing means for receiving the streamed signal sent out therefrom,
**characterised in that**
a second facility (20, 30) of the client terminal being adapted to send out a request within a common session (56), the request instructing the first facility of the client terminal to provide a, copy to the second facility of the signal stream transmitted from the image capturing means, so as to allow the user access to multiple media sessions simultaneously by receiving the copy originally provided to only one of the facilities.

2. Apparatus for distribution of streamed signals according to claim 1, **characterised in that**
the common session being a dedicated communication channel to which all facilities of the client terminal have continual access.

3. Apparatus for distribution of streamed signals according to claims 1 or 2, **characterised in that**
the common session being a locally allocated multicast group of the client terminal.

4. Apparatus for distribution of streamed signals according to any of claims 1-3,
**characterised in that**
the transmitted signal stream is either of an image or audio information signal stream.

5. Apparatus for distribution of streamed signals according to any of claims 1-3,
**characterised in that**
the transmitted signal stream is a video signal stream comprising both image and audio information.

6. Apparatus for distribution of streamed signals according to claim 1, **characterised in that**
facilities (10,20, 30) of the client terminal being activated program instances that are independent of other activated program instances of the client terminal.

7. Apparatus for distribution of streamed signals according to any of claims 1-6, **characterised in that**
the copy of the signal stream which is provided to the second facility of the client terminal is a compressed version of the originally transmitted signal stream.

8. Apparatus for distribution of streamed signals according to any of claims 1-7, **characterised in that**
the copy of the signal stream provided to the second facility of the client terminal is an encoded version of the originally transmitted signal stream

9. Apparatus for distribution of streamed signals according to any of claims 1-8,
**characterised in that**
the copy of the signal stream provided to the second facility of the client terminal in an M-JPEG format of the originally transmitted image and audio signal stream.

10. Apparatus for distribution of streamed signals according to any of preceding claims, **characterised in that**
the image capturing means being a video camera, such as a digital video camera.

11. Apparatus for distribution of streamed signals according to any of preceding claims, **characterised in that**
the image capturing means being a web-camera associated with anyone of the client terminals.

12. Method for distributing information between a group of different participating users in a computer network, the users accessing client terminals having multiple facilities (10, 20, 30) for accessing and participating in at least one media session, the method comprising the steps of:
capturing and transmitting a streamed signal from an image capturing means (60) for distribution within at least one established media session (50, 52, 54) defined by users in a computer network having access to the transmitted signal stream,
establishing a connection between the first facility (10) of the client terminal and image capturing means for receiving a signal stream sent out therefrom,
**characterised by** the steps of:
a second facility (20, 30) of the client terminal, sending out a request (S50) within a common session (56), and
the first facility of the client terminal receiving the request (S70) as an instruction for providing (S80) the second facility of the client terminal with a copy of the signal stream transmitted from the image capturing means so as to allow the user access to multiple media sessions simultaneously by receiving the copy originally provided to only one of the facilities.

13. Method for distributing information according to claim 12, further **characterised by** the step of:
distributing a streamed signal being either of an image or audio signal which is streamed between participants in the media session.

14. Method for distributing information according to claim 12, further **characterised by** the step of:
distributing a streamed signal being a combination of an image and audio signal which is streamed as video between participants in the media session.

15. Method for distributing information according to any of claims 12-14, further
**characterised by** the step of:
utilising facilities (10, 20, 30) of the client terminal being activated program instances that are independent of other activated program instances of the client terminal.

16. Computer program product for distributing streamed signals within a group of users in a computer network, the computer program product being integrated and transmissible between comprised units according to claims 1-11, and the computer program product being adapted for carrying out the method steps of claim 12-15.

## Patentansprüche

1. Vorrichtung zum Verteilen von gestreamten Signalen zwischen einer Gruppe verschiedener teilnehmender Benutzer in einem Computernetzwerk, wobei die Benutzer auf Client-Endgeräte mit mehreren Einrichtungen (10, 20, 30) für die Zugänglichkeit und Teilnahme an verschiedenen Mediensitzungen zugreifen, wobei die Vorrichtung aufweist:
eine Bilderfassungseinrichtung (60), die geeignet ist, ein gestreamtes Signal innerhalb zumindest einer eingerichteten Mediensitzung (50, 52, 54) zu erfassen und zu übertragen, wobei die Sitzung von den Benutzern in einem Computernetzwerk definiert wird, die Zugang zu dem Signalstrom haben,
eine erste Einrichtung (10) des zu der Mediensitzung gehörenden Client-Endgeräts, wobei die Einrichtung eine eingerichtete Verbindung mit der Bilderfassungseinrichtung zum Empfangen des von dieser ausgesendeten gestreamten Signals hat,
**dadurch gekennzeichnet, daß**
eine zweite Einrichtung (20, 30) des Client-Endgeräts geeignet ist, innerhalb einer gemeinsamen Sitzung (56) eine Anforderung auszusenden, wobei die Anforderung die erste Einrichtung des Client-Endgeräts anweist, eine Kopie des von der Bilderfassungseinrichtung übertragenen Signalstroms an die zweite Einrichtung bereitzustellen, um dem Benutzer gleichzeitig Zugang zu mehreren Mediensitzungen zu ermöglichen, indem er die ursprünglich an nur eine der Einrichtungen bereitgestellte Kopie empfängt.

2. Vorrichtung zum Verteilen von gestreamten Signalen nach Anspruch 1, **dadurch gekennzeichnet, daß**:
die gemeinsame Sitzung ein dedizierter Kommunikationskanal ist, zu dem alle Einrichtungen des Client-Endgeräts dauernden Zugang haben.

3. Vorrichtung zum Verteilen von gestreamten Signalen nach Anspruch 1 oder 2, **dadurch gekennzeichnet, daß**:
die gemeinsame Sitzung eine lokal zugewiesene Mehrpunktverbindungsgruppe des Client-Endgeräts ist.

4. Vorrichtung zum Verteilen von gestreamten Signalen nach einem der Ansprüche 1 bis 3, **dadurch gekennzeichnet, daß**:
der übertragene Signalstrom entweder ein Bild- oder ein Audioinformationssignalstrom ist.

5. Vorrichtung zum Verteilen von gestreamten Signalen nach einem der Ansprüche 1 bis 3, **dadurch gekennzeichnet, daß**:
der übertragene Signalstrom ein Videosignalstrom ist, der sowohl Bild- als auch Audioinformation umfasst.

6. Vorrichtung zum Verteilen von gestreamten Signalen nach Anspruch 1, **dadurch gekennzeichnet, daß**:
Einrichtungen (10, 20, 30) des Client-Endgeräts aktivierte Programminstanzen sind, die unabhängig von anderen aktivierten Programminstanzen des Client-Endgeräts sind.

7. Vorrichtung zum Verteilen von gestreamten Signalen nach einem der Ansprüche 1 bis 6, **dadurch gekennzeichnet, daß**:
die Kopie des Signalstroms, die an die zweite Einrichtung des Client-Endgeräts bereitgestellt wird, eine komprimierte Version des ursprünglich übertragenen Signalstroms ist.

8. Vorrichtung zum Verteilen von gestreamten Signalen nach einem der Ansprüche 1 bis 7, **dadurch gekennzeichnet, daß**:
die Kopie des an die zweite Einrichtung des Client-Endgeräts bereitgestellten Signalstroms eine kodierte Version des ursprünglich übertragenen Signalstroms ist.

9. Vorrichtung zum Verteilen von gestreamten Signalen nach einem der Ansprüche 1 bis 8, **dadurch gekennzeichnet, daß**:
die Kopie des an die zweite Einrichtung des Client-Endgeräts bereitgestellten Signalstroms in einem M-JPEG-Format des ursprünglich übertragenen Bild- und Audiosignalstroms ist.

10. Vorrichtung zum Verteilen von gestreamten Signalen nach einem der vorangehenden Ansprüche, **dadurch gekennzeichnet, daß**:
die Bilderfassungseinrichtung eine Videokamera, wie etwa eine digitale Videokamera, ist.

11. Vorrichtung zum Verteilen von gestreamten Signalen nach einem der vorangehenden Ansprüche, **dadurch gekennzeichnet, daß**:
die Bilderfassungseinrichtung eine Webkamera ist, die an irgendeinem der Client-Endgeräte angeschlossen ist.

12. Verfahren zum Verteilen von Informationen zwischen einer Gruppe verschiedener teilnehmender Benutzer in einem Computernetzwerk, wobei die Benutzer auf Client-Endgeräte mit mehreren Einrichtungen (10, 20, 30) zugreifen, um auf zumindest eine Mediensitzung zuzugreifen und daran teilzunehmen, wobei das Verfahren die folgenden Schritte aufweist:
Erfassen und Übertragen eines gestreamten Signals von einer Bilderfassungseinrichtung (60) für die Verteilung innerhalb zumindest einer eingerichteten Mediensitzung (50, 52, 54), die von Benutzern in einem Computernetzwerk definiert wird, die Zugang zu dem übertragenen Signalstrom haben,
Einrichten einer Verbindung zwischen der ersten Einrichtung (10) des Client-Endgeräts und der Bilderfassungseinrichtung zum Empfangen des von dieser ausgesendeten gestreamten Signals,
**gekennzeichnet durch** die folgenden Schritte:
Aussenden einer Anforderung (S50) innerhalb einer gemeinsamen Sitzung (56) **durch** eine zweite Einrichtung (20, 30) des Client-Endgeräts, und
Empfangen der Anforderung (S70) als eine erste Anweisung **durch** die erste Einrichtung des Client-Endgeräts, um die zweite Einrichtung des Client-Endgeräts mit einer Kopie des von der Bilderfassungseinrichtung übertragenen Signalstroms zu versorgen (S80), um dem Benutzer gleichzeitig Zugang zu mehreren Mediensitzungen zu ermöglichen, indem er die ursprünglich an nur eine der Einrichtungen bereitgestellte Kopie empfängt.

13. Verfahren zum Verteilen von Informationen nach Anspruch 12, ferner **gekennzeichnet durch** den Schritt:
Verteilen eines gestreamten Signals, das entweder ein Bild- oder ein Audiosignal ist, das zwischen Teilnehmern in der Mediensitzung gestreamt wird.

14. Verfahren zum Verteilen von Informationen nach Anspruch 12, ferner **gekennzeichnet durch** den Schritt:
Verteilen eines gestreamten Signals, das eine Kombination aus einem Bild- und Audiosignal ist, das als Video zwischen Teilnehmern in der Mediensitzung gestreamt wird.

15. Verfahren zum Verteilen von Informationen nach einem der Ansprüche 12 - 14, ferner **gekennzeichnet durch** den Schritt:
Nutzen der Einrichtungen (10, 20, 30) des Client-Endgeräts, die aktivierte Programminstanzen sind, welche unabhängig von anderen aktivierten Programminstanzen des Client-Endgeräts sind.

16. Computerprogrammprodukt zum Verteilen gestreamter Signale innerhalb einer Gruppe von Benutzern in einem Computernetzwerk, wobei das Computerprogrammprodukt integriert und zwischen einbezogenen Einheiten nach den Ansprüchen 1 bis 11 übertragbar ist und das Computerprogrammprodukte geeignet ist, die Verfahrensschritte der Ansprüche 12 - 15 auszuführen.

## Revendications

1. Appareil de diffusion de signaux en continu entre un groupe de différents utilisateurs participants dans un réseau informatique, les utilisateurs accédant aux terminaux client avec de multiples équipements (10, 20, 30) permettant d'accéder et de participer à diverses sessions médias, l'appareil comprenant,
des moyens (60) de capture d'image adaptés pour capturer et transmettre un signal en continu à l'intérieur d'au moins une session média (50, 52, 54) établie, la session étant définie par les utilisateurs d'un réseau informatique ayant accès au train de signaux,
un premier équipement (10) du terminal client étant associé à la session média, l'équipement ayant une connexion établie avec les moyens de capture d'image pour recevoir le signal en continu envoyé de ceux-ci,
**caractérisé en ce que**
un deuxième équipement (20, 30) du terminal client est adapté pour envoyer une requête dans une session commune (56), la requête indiquant au premier équipement du terminal client de fournir au deuxième équipement une copie du train de signaux transmis par les moyens de capture d'image, afin de permettre à l'utilisateur d'accéder aux multiples sessions médias simultanément en recevant la copie fournie initialement à un seul des équipements.

2. Appareil de diffusion de signaux en continu selon la revendication 1, **caractérisé en ce que**
la session commune est un canal de communication dédié auquel tous les équipements du terminal client ont un accès permanent.

3. Appareil de diffusion de signaux en continu selon les revendications 1 ou 2,
**caractérisé en ce que**
la session commune est un groupe de multidiffusion alloué localement du terminal client.

4. Appareil de diffusion de signaux en continu selon l'une quelconque des revendications 1 à 3, **caractérisé en ce que**
le train de signaux transmis est un train de signaux d'informations d'image ou de signaux d'informations audio.

5. Appareil de diffusion de signaux en continu selon l'une quelconque des revendications 1 à 3, **caractérisé en ce que**
le train de signaux transmis est un train de signaux vidéo comprenant à la fois des informations d'image et des informations audio.

6. Appareil de diffusion de signaux en continu selon la revendication 1, **caractérisé en ce que**
des équipements (10, 20, 30) du terminal client sont des instances de programme activées qui sont indépendantes d'autres instances de programme activées du terminal client.

7. Appareil de diffusion de signaux en continu selon l'une quelconque des revendications 1 à 6, **caractérisé en ce que**
la copie du train de signaux qui est fournie au deuxième équipement du terminal client est une version compressée du train de signaux transmis initialement.

8. Appareil de diffusion de signaux en continu selon l'une quelconque des revendications 1 à 7, **caractérisé en ce que**
la copie du train de signaux fournie au deuxième équipement du terminal client est une version codée du train de signaux transmis initialement.

9. Appareil de diffusion de signaux en continu selon l'une quelconque des revendications 1 à 8, **caractérisé en ce que**
la copie du train de signaux est fournie au deuxième équipement du terminal client dans un format M-JPEG du train de signaux d'image et audio transmis initialement.

10. Appareil de diffusion de signaux en continu selon l'une quelconque des revendications précédentes, **caractérisé en ce que**
les moyens de capture d'image sont une caméra vidéo, telle qu'une caméra vidéo numérique.

11. Appareil de diffusion de signaux en continu selon l'une quelconque des revendications précédentes, **caractérisé en ce que**
les moyens de capture d'image est une webcam associée à n'importe quel terminal client.

12. Procédé de diffusion d'informations entre un groupe de différents utilisateurs participants dans un réseau informatique, les utilisateurs accédant aux terminaux client possédant de multiples équipements (10, 20, 30) pour accéder et participer à au moins une session média, le procédé comprenant les étapes consistant à :
capturer et transmettre un signal en continu à partir de moyens (60) de capture d'image pour une diffusion à l'intérieur d'au moins une session média (50, 52, 54) établie définie par des utilisateurs d'un réseau informatique ayant accès au train de signaux transmis,
établir une connexion entre le premier équipement (10) du terminal client et les moyens de capture d'image afin de recevoir un train de signaux envoyé de celui-ci,
**caractérisé par** les étapes suivantes :
un deuxième équipement (20, 30) du terminal client, envoyant une requête (S50) dans une session commune (56), et
le premier équipement du terminal client recevant la requête (S70) comme une instruction de fournir (S80) au deuxième équipement du terminal client une copie du train de signaux transmis par les moyens de capture d'image, afin de permettre à l'utilisateur d'accéder à de multiples sessions médias simultanément en recevant la copie fournie initialement à un seul des équipements.

13. Procédé de diffusion des informations selon la revendication 12, **caractérisé en outre par** l'étape suivante :
diffusion d'un signal en continu étant un signal d'image ou un signal audio, diffusé en continu entre des participants de la session média.

14. Procédé de diffusion des informations selon la revendication 12, **caractérisé en outre par** l'étape suivante :
diffusion d'un signal en continu étant une combinaison d'un signal d'image et audio qui est diffusé en continu comme une vidéo entre des participants de la session média.

15. Procédé de diffusion des informations selon l'une quelconque des revendications 12 à 14, **caractérisé en outre par** l'étape suivante :
utilisation des équipements (10, 20, 30) du terminal client constituant des instances de programme activées qui sont indépendantes d'autres instances de programme activées du terminal client.

16. Produit de programme informatique permettant de diffuser des signaux en continu à l'intérieur d'un groupe d'utilisateurs dans un réseau informatique, le produit de programme informatique étant intégré et transmissible entre des unités comprises selon les revendications 1 à 11, et le produit de programme informatique étant adapté pour exécuter les étapes du procédé des revendications 12 à 15.
